# EUROPEAN PATENT APPLICATION

(11) **EP 4 718 311 A1**
(43) Date of publication of application: **01.04.2026**
(21) Application number: 25205745.0
(22) Date of filing: 30.09.2025
(51) Int. Cl.: G06F 30/327, G06F 30/337, G06F 115/02

(54) **SYSTEMS AND METHODS FOR GENERATING TEXT AND CODE TO FACILITATE CIRCUIT DESIGN, DEVELOPMENT, AND VERIFICATION**

(30) Priority: 30.09.2024 US 202463701391 P
(71) Applicant: Alpha Design AI, Inc., Goleta California 93117 (US)
(72) Inventor: WANG, Yang, Goleta, 93117 (US); ARORA, Mehir, Goleta, 93117 (US)
(74) Representative: Cooley (UK) LLP

(57) **Abstract**

A non-transitory, processor-readable medium stores instructions that, when executed by a processor, cause the processor to receive multimodal data associated with a plurality of signals. The multimodal data is provided as input to a first machine learning model to produce signal data that represents the plurality of signals, and code associated with the multimodal data is executed to detect an anomaly in the multimodal data. The anomaly is located within the multimodal data by providing the multimodal data and the signal data as input to a second machine learning model. As a result, a plurality of propagation paths defined by the multimodal data is determined, and the plurality of propagation paths is traced to locate the anomaly within the multimodal data. The multimodal data is then provided as input to a third machine learning model to produce modified multimodal data that excludes the anomaly.

## Description

### CROSS REFERENCE TO RELATED APPLICATION

This application claims priority to U.S. Provisional Patent Application No. 63/701,391, filed September 30, 2024, and titled "SYSTEMS AND METHODS FOR GENERATING TEXT AND CODE TO FACILITATE CIRCUIT DESIGN, DEVELOPMENT, AND VERIFICATION," the contents of which are incorporated by reference herein in their entirety.

### FIELD

One or more embodiments described herein relate to semiconductor (e.g., integrated circuit (IC), printed circuit board (PCB), or other device(s)) design and verification, and more specifically to systems and computerized methods for using machine learning models to generate design specification data, machine-readable code, test data, simulation data, and/or the like.

### BACKGROUND

At least some semiconductor products (e.g., circuits, devices, etc.) include billions of transistors organized into complex digital circuits. Verifying the correctness of the designs of these semiconductor products can involve extensive simulation and testing, generating massive amounts of data including simulation waveforms and coverage reports. Some known debugging approaches for semiconductor design face several limitations. For example, some modern waveform files associated with development of a semiconductor product can include millions of signals, causing some known manual analysis techniques to be impractical at scale. Effective debugging can further involve a deep understanding of / expertise in design architecture, signal relationships, and/or temporal behavior. Using some known debugging techniques, a debug process can consume 60-70% of verification time, causing project bottlenecks. Some known verification techniques, moreover, result in coverage gaps, failing to generate diverse test scenarios for comprehensive functional coverage.

To reduce error and time associated with semiconductor product development, and to further facilitate ongoing semiconductor design refinement and scaling, a need exists for complex process automation relating to design specification generation, code creation, testbench development, and software bug detection.

### SUMMARY

According to an embodiment, a non-transitory, machine-readable medium stores instructions that, when executed by a processor, cause the processor to receive text data that specifies a design parameter for a first integrated circuit. The text data is provided as input to a first machine learning model to produce specification data having a predefined format. The specification data is provided as input to a second machine learning model to produce first executable code that represents the specification data. The instructions also cause the processor to provide the first executable code as input to a third machine learning model to (1) identify anomalous code in the first executable code and (2) remove the anomalous code from the first executable code to produce first modified executable code. The specification data is provided as input to a fourth machine learning model to produce testbench data, and a simulation is executed based on the first modified executable code and the testbench data to produce result data. The instructions also cause the processor to provide the result data as input to a fifth machine learning model to produce metric data. The third machine learning model is retrained based on the metric data to produce a retrained third machine learning model, and second executable code is provided as input to the retrained third machine learning model to produce second modified executable code, the second modified executable code being different than the first executable code. A second integrated circuit is produced (e.g., designed, displayed and/or fabricated) based on the second modified executable code.

According to an embodiment, a non-transitory, processor-readable medium stores instructions that, when executed by a processor, cause the processor to receive multimodal data associated with a plurality of signals. The multimodal data is provided as input to a first machine learning model to produce signal data that represents the plurality of signals, and code associated with the multimodal data is executed to detect an anomaly in the multimodal data. The instructions further cause the processor to perform temporal correlation analysis to locate the anomaly within the multimodal data by providing the multimodal data and the signal data as input to a second machine learning model. As a result, a plurality of propagation paths defined by the multimodal data is determined, and the plurality of propagation paths is traced to locate the anomaly within the multimodal data. In response to locating the anomaly within the multimodal data, the instructions cause the processor to provide the multimodal data as input to a third machine learning model to produce modified multimodal data that excludes the anomaly.

According to an embodiment, a method includes producing baseline signal data, via a processor, by parsing at least one of waveform data, specification data, or design data, associated with an integrated circuit. The method also includes simulating, via the processor, register-transfer level (RTL) code associated with the design data, to produce test signal data that encodes a plurality of cycle-indexed samples associated with execution of the integrated circuit. Additionally, the method includes executing, via the processor, the RTL code to identify a test failure and a time window associated with the test failure. The method further includes performing, via the processor, temporal correlation analysis between the baseline signal data and the test signal data, based on the time window, to identify a propagation path that represents a root cause of the test failure and that crosses a plurality of design hierarchies associated with the plurality of cycle-indexed samples. Based on the propagation path, an RTL code patch that excludes anomalous code associated with the test failure is generated via the processor.

### BRIEF DESCRIPTION OF THE DRAWINGS

FIG. 1 shows a system block diagram of a semiconductor data generator, according to an embodiment.
FIG. 2 shows a system block diagram of a compute device included in a semiconductor data generator, according to an embodiment.
FIG. 3 shows a system block diagram of data generator components included in a semiconductor data generator, according to an embodiment.
FIG. 4 shows a system block diagram of optimizer components included in a semiconductor data generator, according to an embodiment.
FIG. 5 shows a system block diagram of modifier components included in a semiconductor data generator, according to an embodiment.
FIG. 6 shows a system block diagram of semiconductor data generator components included in a semiconductor data generator, according to an embodiment.
FIG. 7 shows a system block diagram of semiconductor analysis components included in a semiconductor data generator, according to an embodiment.
FIG. 8 shows a flow diagram illustrating a method for performing anomaly detection within identified signals, according to an embodiment.
FIG. 9 shows a flow diagram illustrating a method for assessing and promoting functional coverage as part of a validation process, according to an embodiment.
FIG. 10 shows a system block diagram of waveform analysis components included in a semiconductor data generator, according to an embodiment.
FIG. 11 shows a flow diagram illustrating a method for performing coverage analysis, according to an embodiment.
FIG. 12 shows a flow diagram illustrating a method for producing modified multimodal data that excludes an anomaly, according to an embodiment.
FIG. 13 shows a flow diagram illustrating a method for producing data to facilitate semiconductor design, development, and/or verification, according to an embodiment.
FIG. 14 shows a flow diagram illustrating a method for generating a register-transfer level (RTL) code patch, according to an embodiment.

### DETAILED DESCRIPTION

At least some systems and methods described herein can automatically (e.g., without human intervention) produce data that can facilitate semiconductor product (e.g., integrated circuit (IC), computer chip, etc.) design, development, and/or verification. At least some systems and methods described herein can include (and/or access) a large language model(s) (LLM(s)) and/or another machine learning model(s) similarly suited for natural language processing. For example, at least some systems and methods described herein can include a plurality of agents (e.g., a plurality of components implemented in software and/or hardware, where each component from the plurality of components can be configured to perform a task that is different from remaining tasks from a plurality of tasks). An agent can include and/or be implemented by an LLM and/or a similarly suited machine learning model. In some implementations, each agent can be implemented by different LLM from a plurality of LLMs. In some implementations, an LLM can implement at least one agent (e.g., multiple agents, all agents, etc.) from the plurality of agents. The plurality of agents can be configured to collectively streamline a Register Transfer Level (RTL) design and verification process. At least in part by leveraging capabilities of LLMs, at least some systems described herein can automate generation of design specifications (e.g., based on natural language commands), code, test plans, and/or verification procedures. Moreover, at least some systems described herein can debug and/or optimize (or improve) semiconductor product designs. At least some systems and methods described herein can reduce the time and/or human input involved in semiconductor product development, ensuring high accuracy, scalability, and/or cost-efficiency for complex chip design and/or verification.

At least some systems and methods described herein are configured to perform autonomous waveform analysis to interpret complex signal relationships. For example, at least some systems and methods described herein are configured to at least one of (1) identify relevant signal subsets from a large plurality (e.g., millions) of potential signals, (2) trace causal relationships that cross hierarchical design boundaries, (3) perform temporal correlation analysis to identify failure propagation paths, and/or (4) self-validate analysis through verification feedback loops.

A failure propagation path can represent, for example, hardware failures (e.g., undesired shorts and/or opens in a circuit, over- and/or under-currents and/or voltages, and/or etc.), digital failures (e.g., bit flips, data corruption, incorrect results, and/or etc.), software and/or firmware errors (e.g., endless loops, and/or etc.), and/or the like.

At least some systems and methods described herein are configured to perform intelligent context extraction to identify information that is relevant to an analysis. More specifically, at least some systems and methods described herein are configured to perform at least one of (1) dynamic context window management based on signal activity and design hierarchy, (2) automatic correlation of waveform data with design intent and constraints, (3) selective extraction of time segments based on failure symptom analysis, and/or (4) cross-referencing of multiple information sources (e.g., design files, testbenches, specifications, and/or etc.).

Alternatively or in addition, at least some systems and methods described herein are configured to perform adaptive coverage gap analysis. For example, in some embodiments, a system described herein can perform at least one of (1) risk-weighted gap prioritization based on design criticality, (2) automatic identification of coverage interdependencies, (3) dynamic test generation strategies adapted to specific gap characteristics, and/or (4) validation of coverage improvements through simulation feedback.

In some embodiments, a system described herein can be configured to facilitate self-correcting verification workflows by performing at least one of (1) hypothesis generation and testing for debug theories, (2) automatic validation of generated test scenarios, (3) iterative refinement based on results feedback, and/or (4) confidence scoring for analysis results and recommendations.

Use cases for at least some systems and methods described herein include, for example, (1) semiconductor product design verification (e.g., automated debug and coverage optimization for processor, system-on-chip (SoC), and/or application-specific integrated circuit (ASIC) designs), (2) regular (e.g., nightly) regression analysis (e.g., autonomous failure triaging and coverage gap analysis in continuous integration workflows), and/or (3) design closure acceleration (e.g., rapid identification and resolution of design issues in pre-silicon verification). Other use cases include, for example, verification methodology development (e.g., analysis of verification effectiveness and test suite optimization), design quality assessment (e.g., automated evaluation of design robustness and verification completeness), and/or tool chain integration (e.g., enhancement of electronic design automation (EDA) tools with artificial intelligence (AI) driven analysis capabilities).

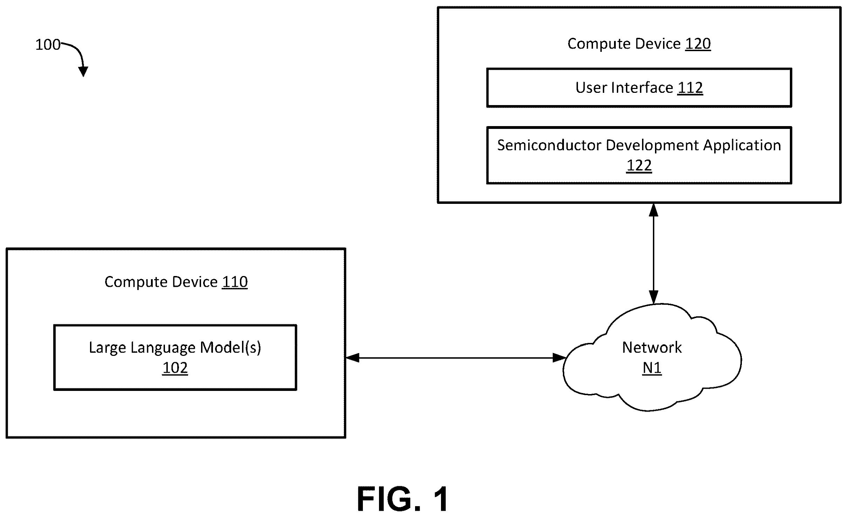

FIG. 1 shows a system block diagram of a semiconductor data generator 100, according to an embodiment. The semiconductor data generator 100 includes a compute device 110, a compute device 120, and a network N1. The semiconductor data generator 100 can include alternative configurations, and various steps and/or functions of the processes described below can be shared among the various devices of the semiconductor data generator 100 or can be assigned to specific devices (e.g., the compute device 110, the compute device 120, and/or the like). For example, in some configurations, a user can provide inputs directly to the compute device 110 rather than via the compute device 120, as described herein.

Semiconductor data generated by the semiconductor data generator 100 can include, for example, simulation data that can represent simulated operation of a semiconductor device, modified specification and/or design data that represents a semiconductor device under development, report data that indicates an anomaly and/or a recommendation to mitigate an anomaly, and/or etc., as described herein.

In some embodiments, the compute device 110 and/or the compute device 120 can include any suitable hardware-based computing devices and/or multimedia devices, such as, for example, a server, a desktop compute device, a smartphone, a tablet, a wearable device, a laptop and/or the like. In some implementations, the compute device 110 and/or the compute device 120 can be implemented at an edge node (e.g., with respect to the network N1) or other remote (e.g., with respect to the network N1) computing facility and/or device. In some implementations, each of the compute device 110 and/or compute device 120 can be or included in a data center or other control facility and/or device configured to run and/or execute a distributed computing system, and can communicate with other compute devices.

The compute device 110 can include a large language model(s) 102 (and/or another machine learning model(s), such as a transformer-based model and/or the like). In some implementations, the large language model(s) 102 can be commercially hosted and accessed, via the network N1, by a semiconductor development application 122 (described below) that is executed via the compute device 120. Alternatively or in addition, although not shown in FIG. 1, the large language model(s) 102 can be locally hosted (e.g., as to the compute device 120) and/or included in the semiconductor development application 122.

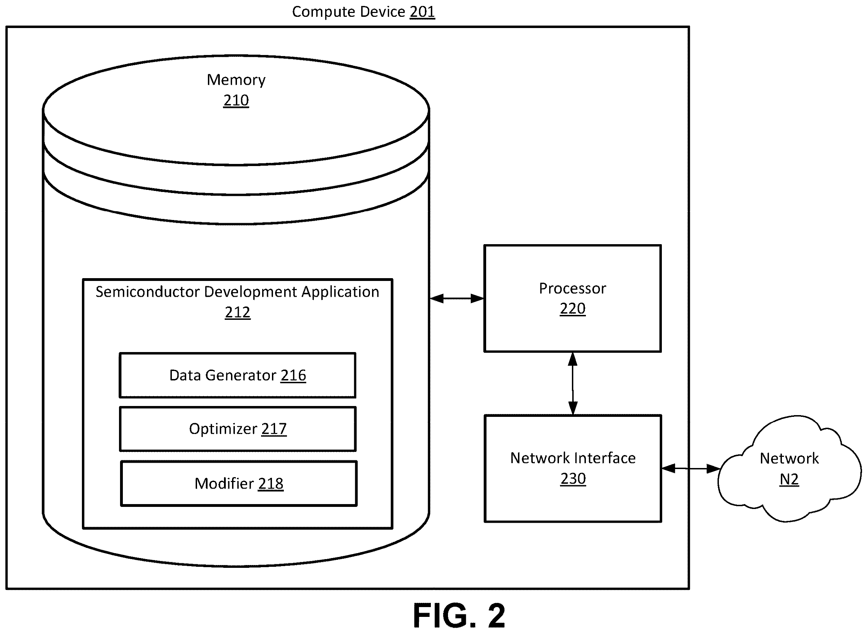

The compute device 120 can implement a user interface 112 and a semiconductor development application 122 (e.g., that is functionally and/or structurally equivalent to the semiconductor development application 212 of FIG. 2 (described herein)). The user interface 112 can be a graphical user interface (GUI), and the compute device 120 can be configured to (1) receive input data (e.g., natural language input, described herein) from the user via the user interface 112 and/or (2) cause display, via the user interface 112, of output data (e.g., code suggestion data and/or test suggestion data, described further herein) generated by the semiconductor development application 122. The semiconductor development application 122 can be implemented via software and/or hardware. As described herein, the semiconductor development application 122 can use the large language model(s) 102 to produce data that can facilitate semiconductor (e.g., integrated circuit (IC), computer chip, etc.) design, development, and/or verification.

The compute device 110 can be networked and/or communicatively coupled to the compute device 120, via the network N1, using wired connections and/or wireless connections. The network N1 can include various configurations and protocols, including, for example, short range communication protocols, Bluetooth^{®}, Bluetooth^{®} LE, the Internet, World Wide Web, intranets, virtual private networks, wide area networks, local networks, private networks using communication protocols proprietary to one or more companies, Ethernet, WiFi^{®} and/or Hypertext Transfer Protocol (HTTP), cellular data networks, satellite networks, free space optical networks and/or various combinations of the foregoing. Such communication can be facilitated by any device capable of transmitting data to and from other compute devices, such as a modem(s) and/or a wireless interface(s).

In some implementations, although not shown in FIG. 1, the semiconductor data generator 100 can include multiple compute devices 110 and/or compute devices 120. For example, in some implementations, the semiconductor data generator 100 can include a plurality of compute devices 110, where each compute device 110 can be associated with a different user from a plurality of users. In some implementations, a plurality of compute devices 110 can be associated with a single user, where each compute device 110 can be associated with, for example, a different input modality (e.g., text input, audio input, video input, etc.).

FIG. 2 shows a system block diagram of a compute device included in a semiconductor data generator, according to an embodiment. The compute device 201 can be structurally and/or functionally similar to, for example, the compute device 110 and/or 120 of the semiconductor data generator 100 shown in FIG. 1. The compute device 201 can be a hardware-based computing device, a multimedia device, or a cloud-based device such as, for example, a computer device, a server, a desktop compute device, a laptop, a smartphone, a tablet, a wearable device, a remote computing infrastructure, and/or the like. The compute device 201 includes a memory 210, a processor 220, and a network interface 230 operably coupled to a network N2.

The processor 220 can be, for example, a hardware-based integrated circuit (IC), or any other suitable processing device configured to run and/or execute a set of instructions or code (e.g., stored in memory 210). For example, the processor 220 can be a general-purpose processor, a central processing unit (CPU), an accelerated processing unit (APU), an application specific integrated circuit (ASIC), a field programmable gate array (FPGA), a programmable logic array (PLA), a complex programmable logic device (CPLD), a graphics processing unit (GPU), a programmable logic controller (PLC), a remote cluster of one or more processors associated with a cloud-based computing infrastructure and/or the like. The processor 220 is operatively coupled to the memory 210 (described herein). In some embodiments, for example, the processor 220 can be coupled to the memory 210 through a system bus (for example, address bus, data bus and/or control bus). In some implementations, the processor 220 can include a plurality of processors arranged in parallel.

The memory 210 can be, for example, a random-access memory (RAM), a memory buffer, a hard drive, a read-only memory (ROM), an erasable programmable read-only memory (EPROM), and/or the like. The memory 210 can store, for example, one or more software modules and/or code that can include instructions to cause the processor 220 to perform one or more processes, functions, and/or the like. In some implementations, the memory 210 can be a portable memory (e.g., a flash drive, a portable hard disk, and/or the like) that can be operatively coupled to the processor 220. In some instances, the memory can be remotely operatively coupled with the compute device 201, for example, via the network interface 230. For example, a remote database server can be operatively coupled to the compute device 201.

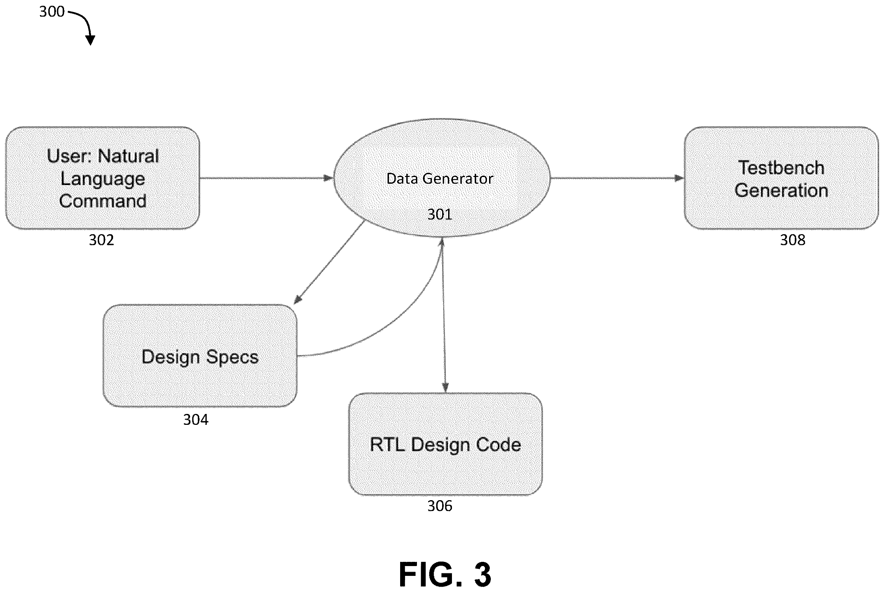

The memory 210 can store various instructions associated with processes, algorithms and/or data, as described herein. Memory 210 can further include any non-transitory computer-readable storage medium for storing data and/or software that is executable by processor 220, and/or any other medium which may be used to store information that may be accessed by processor 220 to control the operation of the compute device 201. For example, the memory 210 can store data associated with a semiconductor development application 212. The semiconductor development application 212 can be functionally and/or structurally similar to the semiconductor development application 122 of FIG. 1 and/or the semiconductor development application 312 of FIG. 3 (described further herein).

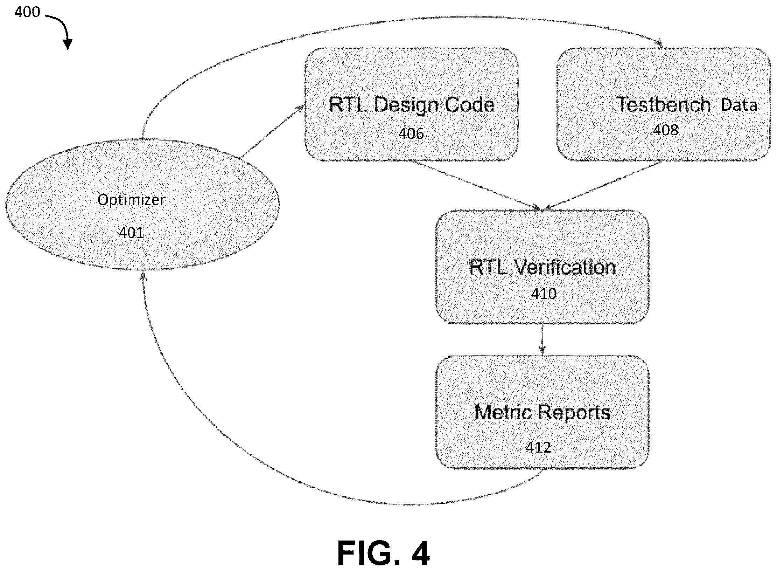

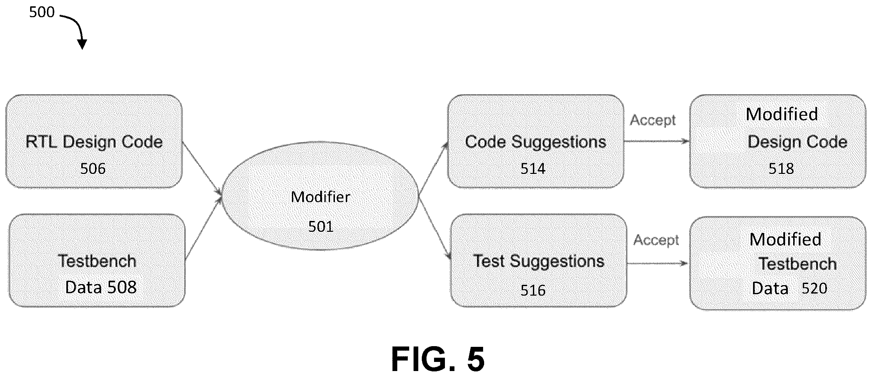

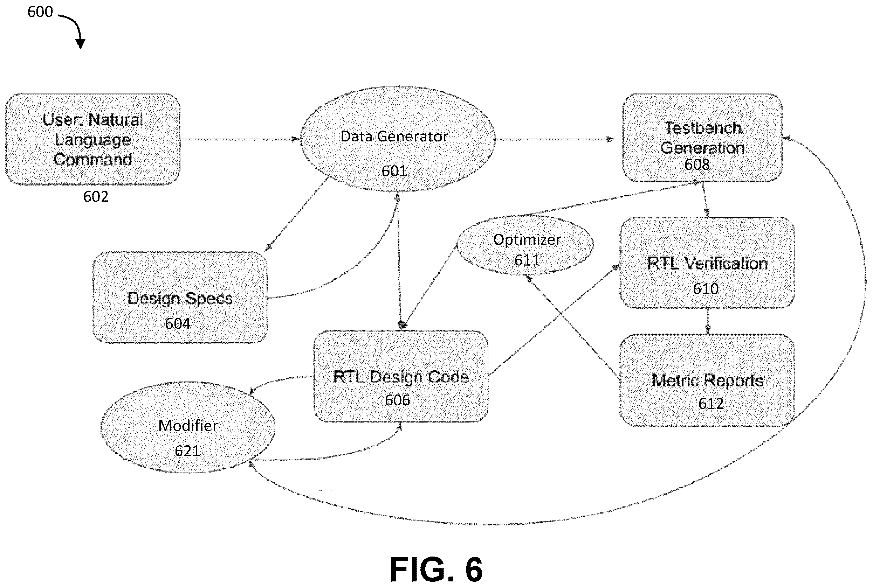

The semiconductor development application 212 includes a data generator 216, which can be functionally and/or structurally similar to the data generator 301 of FIG. 3, described further herein. The semiconductor development application 212 also includes (1) an optimizer 217, which can be functionally and/or structurally similar to the optimizer 401 of FIG. 4 and/or the optimizer 611 of FIG. 6, each of which is described further herein, and (2) a modifier 218, which can be functionally and/or structurally similar to the modifier 501 of FIG. 5 and/or the modifier 621 of FIG. 6, each of which is described further herein.

The network interface 230 can be configured to connect to the network N2, which can be functionally and/or structurally similar to the network N1 of FIG. 1. For example, network N2 can use any of the communication protocols described above with respect to network N1 of FIG. 1.

In some instances, the compute device 201 can further include a display, an input device, and/or an output interface (not shown in FIG. 2). The display can be any display device (e.g., a monitor, screen, etc.) by which the compute device 201 can output and/or display data (e.g., via a user interface that is structurally and/or functionally similar to the user interface 112 of FIG. 1). The input device can include a mouse, keyboard, touch screen, voice interface, and/or any other hand-held controller or device or interface via which a user may interact with the compute device 201. The output interface can include a bus, port, and/or other interfaces by which the compute device 201 may connect to and/or output data to other devices and/or peripherals.

FIG. 3 shows a system block diagram of data generator components 300 included in a semiconductor data generator, according to an embodiment. The data generator components 300 can be included in a semiconductor data generator that is functionally and/or structurally similar to the semiconductor data generator 100 of FIG. 1. The data generator components 300 can be associated with a compute device (e.g., a compute device that is structurally and/or functionally similar to the compute device 201 of FIG. 2 and/or the compute devices 110 and/or 120 of FIG. 1). In some instances, for example, the data generator components 300 can be included in and/or associated with (1) the semiconductor development application 122 of FIG. 1 and/or (2) the semiconductor development application 212 of FIG. 2. In some instances, the data generator components 300 can include software stored in memory 210 and configured to execute via the processor 220 of FIG. 2. In some instances, for example, at least a portion of the data generator components 300 can be implemented in hardware (e.g., an ASIC).

The data generator components 300 can include a data generator 301 that can be configured to generate data that can be associated with a design phase of semiconductor development. For example, the data generator 301 can include (or have access to) a large language model(s) (LLM(s)) to automate and/or improve the generation of a design specification 304. More specifically, the data generator 301 can interpret natural language data 302 (e.g., a user-defined command, also referred to herein as natural language design text) to generate the design specification 304, which the data generator 301 can then receive as input to produce code 306 (e.g., RTL design code (also referred to herein as RTL code) and/or other machine-readable code that represents at least a portion of the design specification 304). In some instances, the design specification 304 can be structured, such that the design specification 304 is formatted based on a predefined schema. Based on the design specification 304, the data generator 301 can be further configured to generate test plan data (also referred to herein as testbench data) via a testbench generation component 308. The test plan data can include data that defines a validation test to be performed, where that validation test can be configured to validate and/or verify the design specification 304 and/or the code 306, as described further herein.

The natural language data 302 can include user inputs such as, for example, design requirements, specifications, and/or other natural language descriptions. The data generator 301 can be configured to translate the natural language data into the design specification 304, which can include, for example, structured design documents (e.g., having a predefined format, a standardized format, etc.). In some instances, the design specification 304 can include a plurality of design specifications that are associated with different aspects of a semiconductor device. The design specification 304 can serve as a foundation for subsequent stages of the system (as described herein), such that the initial user input within the natural language data 302 can be reflected in a final semiconductor design.

Following the generation of design specification 304, the data generator 301 can be further configured to transform the design specification 304 into code 306 (e.g., executable code, machine-readable code, etc.). The code 306 can conform to specifications outlined by the design specification 304, producing high-quality and/or reliable code that can be suitable for further testing. The code 306 can be provided as input to the testbench generation component, which can be configured to automatically create comprehensive test plans, testbenches, SystemVerilog assertions, universal verification methodology (UVM) test codes, RTL verification code, and/or the like, based on the code 306. These test plans and/or testbenches can facilitate verification that the code 306 functions as intended. In some instances, the data generator 301 and/or the testbench generation component can be configured to generate novel code (e.g., code not previously known to a user and/or code not included in a training data set used to train a machine learning model, such as an LLM, included in the data generator 301 and/or the testbench generation component). For example, the testbench generation component can be configured to generate new and/or diverse testcases to improve a verification process.

In some implementations, the data generator components 300 can include a compilation and simulation component (not shown in FIG. 3), which can be configured to automatically compile testbenches generated by the testbench generation component 308 and execute simulations to test performance of the design (e.g., the design indicated by the code 306). Alternatively or in addition, the data generator components 300 can include a verification component (e.g., that is functionally and/or structurally similar to a verification component), which can include an LLM-based verifier that can be configured to analyze simulation results produced by the compilation and simulation component. More specifically, the verification component can be configured to generate detailed verification reports that can indicate whether the design meets a specified design requirement(s). The verification report can provide feedback that can be used to further refine a design, enabling iterative improvements and/or optimization. For example, a verification report generated by the verification component can include text data, and this text data can be provided as input to the data generator 301 to generate a revised design specification and/or revised code if, for example, the verification report indicates that the design specification 304 and/or code 306 fails to comport with a predefined rule (e.g., a user-defined design requirement, an industry standard, etc.). Alternatively or in addition, as described further below at least in relation to FIG. 4, the verification report can be provided as input to an optimizer.

In some implementations, the verification component can include a commercial tool (e.g., Synopsys VCS, Cadence Xcelium, Siemens Questa, Verilator, and/or another tool suited for performing simulation and/or verification tasks. The data generator 301 (and/or another agent included in the data generator components 300) can be configured (e.g., trained) to select a commercial tool (e.g., from a plurality of commercial tools) based on, for example, a type of test and/or simulation involved in analyzing the generated code 306.

FIG. 4 shows a system block diagram of optimizer components 400 included in a semiconductor data generator, according to an embodiment. The optimizer components 400 can be included in a semiconductor data generator that is functionally and/or structurally similar to the semiconductor data generator 100 of FIG. 1. The optimizer components 400 can be associated with a compute device (e.g., a compute device that is structurally and/or functionally similar to the compute device 201 of FIG. 2 and/or the compute devices 110 and/or 120 of FIG. 1). In some instances, for example, the optimizer components 400 can be included in and/or associated with (1) the semiconductor development application 122 of FIG. 1 and/or (2) the semiconductor development application 212 of FIG. 2. In some instances, the optimizer components 400 can include software stored in memory 210 and configured to execute via the processor 220 of FIG. 2. In some instances, for example, at least a portion of the optimizer components 400 can be implemented in hardware (e.g., an ASIC).

The optimizer components 400 can include an optimizer 401, which can be configured to iteratively refine code 406 (e.g., code that is functionally and/or structurally similar to the code 306 of FIG. 3) and/or testbench data 408 (e.g., that is generated by a testbench generation component that is functionally and/or structurally similar to the testbench generation component 308 of FIG. 3). The optimizer 401 can receive as input a metric report(s) 412 (e.g., also referred to herein as a verification report(s), as described at least in relation to FIG. 3) that can indicate an assessment of a factor such as coverage, timing, power consumption, area, and/or other performance metrics. The metric reports 412 can be produced by a verification component 410 (e.g., a register-transfer level (RTL) verification component and/or a verification component functionally and/or structurally similar to the verification component as described at least in relation to FIG. 3). The optimizer 401 can include (or have access to) an LLM(s) that can be configured to interpret the report(s) to identify aspects of the code 406 and/or the testbench data 408 that can be improved. The optimizer 401 can be further configured to automatically adjust design and/or verification processes (e.g., by automatically modifying the code 406 and/or the testbench data 408) to meet or exceed a desired specification. This iterative approach can ensure that each cycle of verification (e.g., as facilitated by the optimizer components 400) can result in progressively more refined and/or efficient design, reducing the likelihood of human error and/or accelerating a development timeline.

To illustrate, the verification component 410 can produce a report that indicates that an IC (as represented by the code 406) fails to satisfy a power requirement (or guideline, principle, and/or the like). In response, the optimizer 401 can be configured to modify the code 406 to, for example, replace a first data structure, first algorithm, and/or the like, with a second data structure, second algorithm, and/or the like. In some implementations, the optimizer 401 can be configured to modify the code 406 to represent an IC having a modified physical design (e.g., that includes a modified component, that includes a replacement component, or that omits a component), a modified layout, and/or the like. As described further herein, the optimizer 401 can be trained to modify the code 406 based on reinforcement learning (e.g., training based on previously processed code), supervised learning (e.g., based on manually-labelled data, manually produced code, etc.), and/or the like.

Although not shown in FIG. 4, in some implementations, the optimizer components 400 can include a compilation and simulation component (e.g., which can be functionally and/or structurally similar to the compilation and simulation component described in relation to FIG. 3). The compilation and simulation component can be configured to compile generated testbench data 408 to produce compiled data and execute a simulation(s) based on the compiled data to test the design. The compilation and simulation component can execute the simulation(s) to validate the design's performance against a test plan (e.g., as indicated in the testbench data 408). The optimizer 401 can be configured to analyze simulation results and verification reports to assess performance metrics such as coverage, timing, power consumption, and/or area. Based on this assessment, the optimizer 401 can be further configured to iteratively refine the code 406 and/or the testbench data 408 to enhance overall performance, ensuring that the design (e.g., as indicated by the code 406) meets or exceeds a specification(s).

FIG. 5 shows a system block diagram of modifier components 500 included in a semiconductor data generator, according to an embodiment. The modifier components 500 can be included in a semiconductor data generator that is functionally and/or structurally similar to the semiconductor data generator 100 of FIG. 1. The modifier components 500 can be associated with a compute device (e.g., a compute device that is structurally and/or functionally similar to the compute device 201 of FIG. 2 and/or the compute devices 110 and/or 120 of FIG. 1). In some instances, for example, the modifier components 500 can be included in and/or associated with (1) the semiconductor development application 122 of FIG. 1 and/or (2) the semiconductor development application 212 of FIG. 2. In some instances, the modifier components 500 can include software stored in memory 210 and configured to execute via the processor 220 of FIG. 2. In some instances, for example, at least a portion of the modifier components 500 can be implemented in hardware (e.g., an ASIC).

The modifier components 500 can include a modifier 501, which can be configured to automatically detect and/or resolve errors (e.g., "software bugs") within code 506 and/or testbench data 508. The code 506 can be functionally and/or structurally similar to the code 306 of FIG. 3 and/or the code 406 of FIG. 4, and the testbench data 508 can be functionally and/or structurally similar to the testbench data 408 and/or produced by a testbench generation component that is functionally and/or structurally similar to the testbench generation component 308 of FIG. 3. The modifier 501 can include (or have access to) an LLM(s) that can be configured to analyze the code 506 and/or the testbench data 508 to identify potential errors and/or inefficiencies. Upon detecting an issue, the modifier 501 can be configured to generate code suggestion data 514 and/or test suggestion data 516 to indicate a resolution for the bug. More specifically, the code suggestion data 514 and/or test suggestion data 516 can indicate suggested adjustments to logic, timing, and/or resource allocation within the code 506 and/or testbench data 508. Once the user approves the suggested adjustments (e.g., via the GUI), the modifier 501 can be configured to automatically update (e.g., modify) the code 506 and/or testbench data 508 to produce modified design code 518 and/or modified testbench data 520. The modifier 501 can be trained based on, for example, human (e.g., developer) annotated code (e.g., labeled anomalous code), and/or the like.

In some implementations, the code suggestion data 514 and/or the test suggestion data 516 can be displayed (e.g., via a graphical user interface (GUI)) to a user for approval. This user-in-the-loop approach can, in some implementations, facilitate reinforcement learning, where the modifier 501 can be trained during a plurality of iterations to identify and/or fix issues more efficiently during a subsequent execution (e.g., to exclude generation of graphical data (e.g., rendered data) and/or to exclude causing display of the code suggestion data 514 and/or test suggestion data 516 to the user). As a result of this reinforcement learning, the semiconductor data generator components 600 can be configured to produce a refined modifier (e.g., having a modified weight(s) as compared to the modifier 501 before the reinforcement learning). Alternatively or in addition, the user-in-the-loop approach can facilitate refinement (e.g., through reinforcement learning) of a data generator (e.g., that is functionally and/or structurally similar to the data generator 301 of FIG. 3) to produce a refined data generator that can produce refined code (e.g., the modified design code 518, which can be a refinement of the design code 506, and/or the modified testbench data 520 (e.g., modified testbench code), which can be a refinement of the testbench data 508). This refined code can have reduced software anomalies as compared to the design code 506 and/or testbench data 508 (e.g., testbench data).

In some instances, the modifier components 500 can be configured to produce a refined modifier to improve software anomaly (e.g., software bug) detection in a larger scale codebase and/or in code that includes a plurality of integrated code blocks (e.g., that are associated with different libraries, developers, functions, etc.). By analyzing integrated code rather than individual code blocks (e.g., prior to integration), the refined modifier can be configured to detect software anomalies that are associated with the integration of the code blocks, such as software anomalies in code that is associated with two or more code blocks.

Alternatively or in addition, the refined modifier can be configured to detect software anomalies in larger scale code (e.g., code that includes a plurality of code blocks) during a single execution run. A refined data generator (as described above), on the other hand, can be configured to produce an individual code block having reduced software anomalies as compared to code produced by (or a result of) the modifier 501 (e.g., before refinement). The refined data generator can produce a plurality of individual code blocks over a plurality of execution runs, and in some instances, the refined data generator can have a larger size (e.g., more nodes) than a precursor data generator before refinement and/or use increased processing resources (as compared to the precursor data generator) while generating each refined code block during each execution run. The difference in size between the refined data generator and the precursor data generator can, in some instances, be higher as a result of the refined data generator having to generate refined code (e.g., rather than having to detect software anomalies). As a result, therefore, the refined modifier can, in some instances, detect and/or correct software anomalies in generated code using reduced processing resources and/or faster than a refined data generator that can generate refined code blocks that exclude those detected software anomalies.

FIG. 6 shows a system block diagram of semiconductor data generator components 600 included in a semiconductor data generator, according to an embodiment. The semiconductor data generator components 600 can be included in a semiconductor data generator that is functionally and/or structurally similar to the semiconductor data generator 100 of FIG. 1. The semiconductor data generator components 600 can be associated with a compute device (e.g., a compute device that is structurally and/or functionally similar to the compute device 201 of FIG. 2 and/or the compute devices 110 and/or 120 of FIG. 1). In some instances, for example, the semiconductor data generator components 600 can be included in and/or associated with (1) the semiconductor development application 122 of FIG. 1 and/or (2) the semiconductor development application 212 of FIG. 2. In some instances, the semiconductor data generator components 600 can include software stored in memory 210 and configured to execute via the processor 220 of FIG. 2. In some instances, for example, at least a portion of the semiconductor data generator components 600 can be implemented in hardware (e.g., an ASIC).

The semiconductor data generator components 600 can include a data generator 601 (e.g., that is functionally and/or structurally similar to the data generator 301 of FIG. 3), a testbench generation component 608 (e.g., that is functionally and/or structurally similar to the testbench generation component 308 of FIG. 3), a verification component 610 (e.g., that is functionally and/or structurally similar to the verification component 410 of FIG. 4), an optimizer 611 (e.g., that is functionally and/or structurally similar to the optimizer 401 of FIG. 4), and a modifier 621 (e.g., that is functionally and/or structurally similar to the modifier 501 of FIG. 5).

The data generator 601 can initiate a workflow by generating a design specification(s) 604, code 606, and/or testbench data (e.g., via the testbench generation component 608) based on natural language input 602, as described herein. The optimizer 611 can refine the code 606 and/or testbench data based on a verification report(s), which can be produced by the verification component 610 (e.g., that is functionally and/or structurally similar to the verification component 410 of FIG. 4). More specifically, the optimizer 611 can refine parameters such as coverage, timing, power, area, and/or other parameters that can define and/or inform semiconductor chip design. The modifier 621 can be configured to automatically detect and/or resolve software errors (e.g., compiler errors, style guide errors, etc.) within the code 606 and/or testbench data (e.g., code within the testbench data that defines a test). The modifier 621 can be further configured to generate suggestion data, which can be displayed to a user (e.g., via a GUI) to solicit user approval. In response to receiving the user approval, the modifier 621 can automatically update the code 606 and/or the testbench data to implement the suggestion indicated by the suggestion data.

The verification component 610 can be further configured to produce simulation results (e.g., that are produced based on a simulation that is executed based on the testbench data). The verification component 610 can generate comprehensive verification reports that highlight a discrepancy and/or issue identified during the simulation. In some instances, these reports can indicate recommendations for corrections and/or further optimizations. Such recommendations can include, for example, a correction to a design layout (e.g., a modification to a placement, performance rating, etc., of a component (e.g., a transistor, capacitor, resistor etc.) included in an integrated circuit, a modification to wire routing, etc.). The reports can be provided as input to the optimizer 611 and/or the modifier 621 to refine the code 606 and/or the testbench data. This iterative feedback loop facilitated by the verification component 610, the optimizer 611, and/or the modifier 621 can facilitate continuous improvement to produce improved (e.g., more reliable, more capable, smaller footprint, etc.) semiconductor products.

To illustrate the semiconductor data generator components 600 in use, a natural language input 602 can include the text data "Generate design code for an 8bit mux." In response to receiving this text data as input, the data generator 601 can generate the following example code 606:

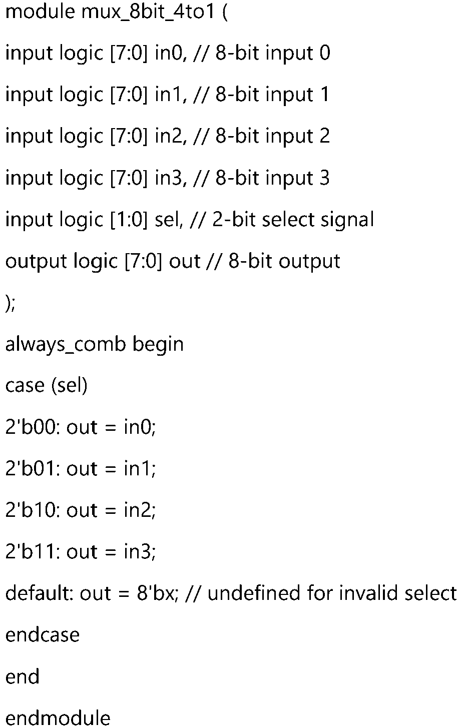

Alternatively or in addition, the testbench generation component 608 can be configured to generate the following testbench code based on the example natural language input 602 and/or the example code 606:

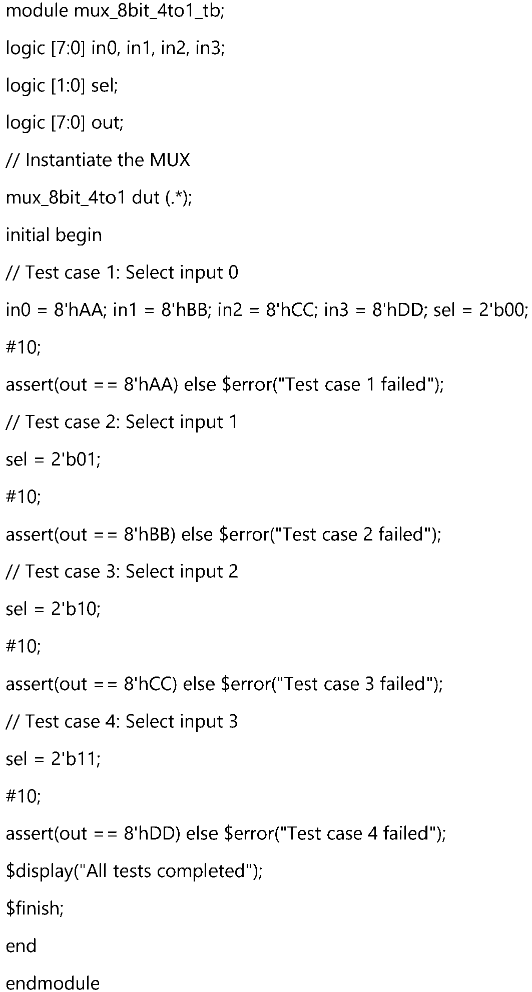

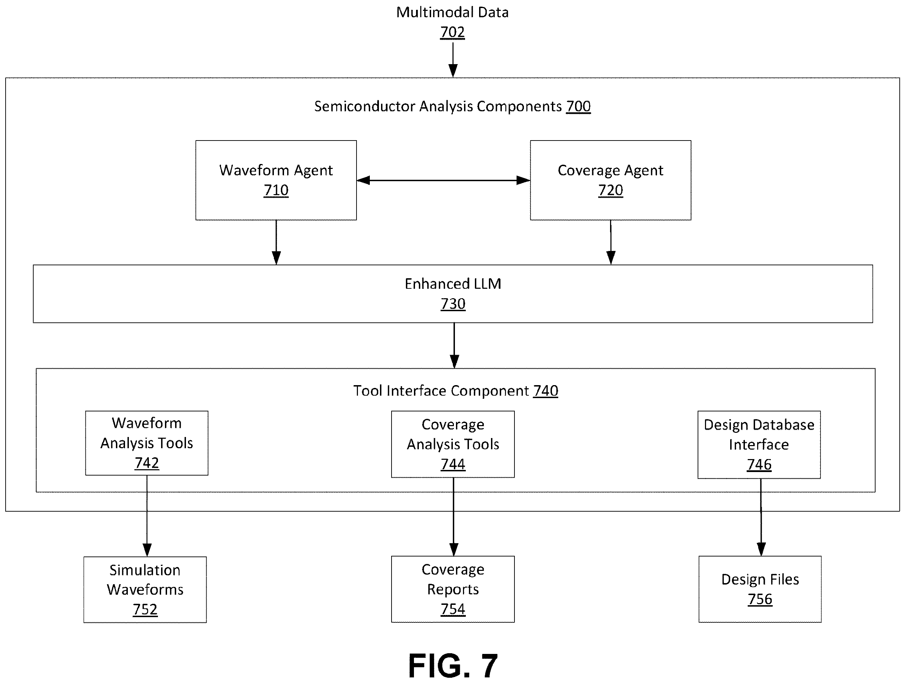

FIG. 7 shows system block diagram of semiconductor analysis components 700, according to an embodiment. The semiconductor analysis components 700 can be included in a semiconductor data generator that is functionally and/or structurally similar to the semiconductor data generator 100 of FIG. 1. The semiconductor analysis components 700 can be associated with a compute device (e.g., a compute device that is structurally and/or functionally similar to the compute device 201 of FIG. 2 and/or the compute devices 110 and/or 120 of FIG. 1). In some instances, for example, the semiconductor analysis components 700 can be included in and/or associated with (1) the semiconductor development application 122 of FIG. 1 and/or (2) the semiconductor development application 212 of FIG. 2. In some instances, the semiconductor analysis components 700 can include software stored in memory 210 and configured to execute via the processor 220 of FIG. 2. In some instances, for example, at least a portion of the semiconductor data generator components 600 can be implemented in hardware (e.g., an ASIC).

The semiconductor analysis components 700 receive multimodal data 702 as input and include a waveform agent 710, a coverage agent 720, and a tool integration component 740. The semiconductor analysis components 700 further include or have access to an enhanced LLM 730, which can implement the waveform agent 710 and the coverage agent 720. The tool integration component 740 includes waveform analysis tools 742, which can be configured to generate simulation waveforms 752. The tool integration component 740 also includes coverage analysis tools 744, which can be configured to generate coverage reports 754. Additionally, the tool integration component 740 includes a design database interface 746, which can be configured to produce and/or retrieve design files 756 from a design database.

The multimodal data 702 can include at least one of register transfer level (RTL) data, universal verification methodology (UVM) testbench data, test plan data, timing diagram data, block diagram data, text data (e.g., associated with a portable document format (PDF) and/or the like), table data, schematic data, and/or waveform data. In some instances, the multimodal data 702 can represent a plurality of signals using a plurality of signal encoding schemes. For example, the multimodal data 702 can represent a first signal using a big-endian bit order and a second signal using a little-endian bit order. In some instances, the multimodal data 702 can represent the same signal across different design files using both big-endian and little-endian bit orders. To illustrate, development of a semiconductor device (e.g., an integrated circuit) can involve design files in the thousands, tens of thousands, hundreds of thousands, etc., and these files can be produced by different entities (e.g., departments, suppliers, etc.) that use different signal encoding schemes (e.g., bitstream formats) to represent temporal / sequenced signal data.

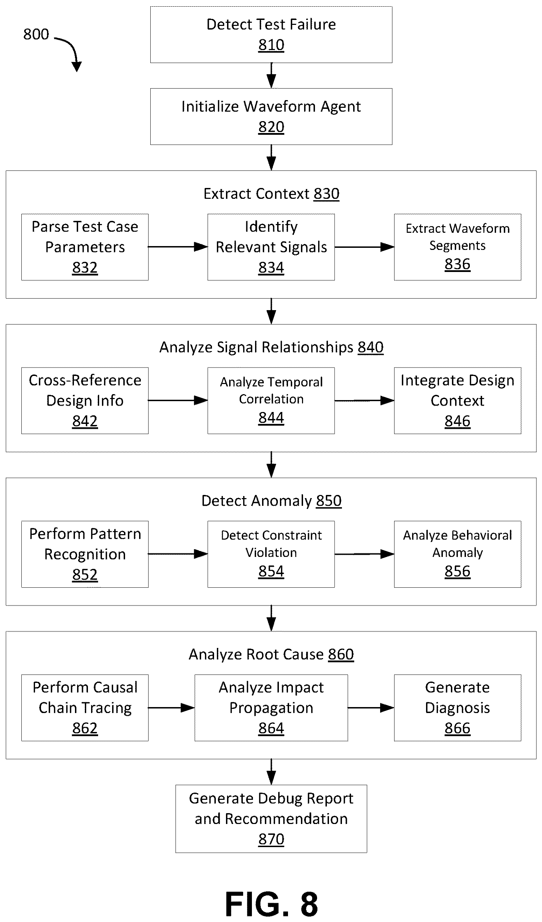

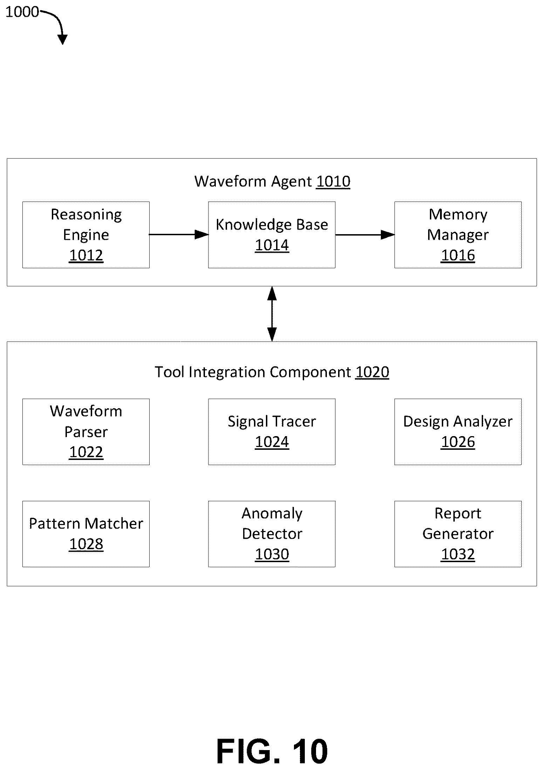

As described further herein at least in relation to FIGS. 8 and 10, the waveform agent 710 can be configured to autonomously analyze simulation waveforms to identify, localize, and diagnose hardware design failures. More specifically, the waveform agent 710 can be configured to perform at least one of (1) autonomous waveform analysis and failure diagnosis, (2) intelligent signal tracing and context extraction, (3) self-correcting debugging workflows with verification feedback, and/or (4) scalable analysis of large-scale simulation data. In some implementations, the waveform agent 710 can (1) operate over waveform traces, RTL, and/or universal verification methodology (UVM) testbenches, (2) construct a signal-dependency graph keyed by simulation cycle counters (also referred to herein as cycle-indexed samples), and/or (3) reduce a search space, simulator iterations, and/or time-to-localize root cause. As described herein, a signal-dependency graph (or another representation of a plurality of dependencies) can indicate input signals for generating a given signal and/or output signals generated from a given signal. In some instances, an input and/or output signal can be associated with a different execution cycle(s) of an integrated circuit than an execution cycle for the given signal. The signal dependency graph (or another representation of a plurality of dependencies) can therefore represent signal dependencies across a plurality of execution cycles simulated for the integrated circuit. In some implementations, the waveform agent 710 can invoke a simulator on a generated testbench, map timestamps to code (e.g., to facilitate debugging), and/or generate modified code and/or code patches to mitigate anomalies.

Input processing performed by the waveform agent 710 can include parsing of waveform files (e.g., having value change dump (VCD) format, fast signal trace (FST) format, a wave log format, and/or the like). This parsing can further include, for example, test case metadata extraction, design hierarchy database integration, and/or constraint and assertion database correlation. The waveform agent 710 can further implement an analysis engine that is configured to perform at least one of construction of a representation of a plurality of dependencies (e.g., signal dependency graph construction), temporal pattern recognition, statistical anomaly detection, and/or behavioral model comparison. An example of a representation of a plurality of dependencies can include, for example, a data structure (e.g., a graph, a table, an array, and/or etc.) that defines input signals for generating a given signal and/or output signals generated from a given signal. In some instances, these input and/or output signals can be associated with a different design hierarchy than the design hierarchy for the given signal. The waveform agent 710 can generate, for example, structured debug reports with confidence scores, signal trace visualizations with failure highlighting, root cause analysis with supporting evidence, and/or recommended corrective actions with implementation guidance.

The coverage agent 720 can include, for example, a functional coverage agent that is configured to generate, analyze, and/or optimize (or improve) verification test scenarios to achieve comprehensive design coverage. More specifically, the coverage agent 720 can be configured to perform at least one of (1) intelligent test scenario generation and optimization (or improvement), (2) dynamic coverage gap analysis and targeted test creation, (3) automated coverage metric evaluation and reporting, and/or (4) adaptive testing strategies based on design characteristics. A coverage metric can include, for example, a percentage of predefined coverage goals that have been covered by defined and/or performed validation tests.

Coverage database analysis performed by the coverage agent 720 can include multidimensional coverage metric parsing and gap identification across functional, code, and assertion coverage. The coverage database analysis can further include cross-coverage correlation analysis and/or historical trend analysis for coverage evolution. The coverage agent 720 can further implement a test generation engine to perform at least one of constraint-based random test generation, directed test scenario creation, protocol-specific test pattern synthesis, and/or corner case identification and test development.

In use, the waveform agent 710 can be configured to parse the multimodal data 702 (whether that data is represented in a specification, table, waveform, and/or the like) to identify temporal signal data. For example, the waveform agent 710 can be configured to perform optical character recognition and/or the like. The enhanced LLM 730 can receive this temporal signal data to perform temporal correlation analysis, as described further below.

In at least some instances, a processor under development can be designed to execute across multiple cycles, and these execution cycles can be represented by a plurality of files (e.g., specifications, design files, documents, executable code, etc.). The enhanced LLM 730 can be configured to perform temporal correlation analysis by identifying and aligning a plurality of signals (e.g., relevant signals) represented across the plurality of files. The enhanced LLM 730 can further trace cascading failure propagation paths, based on the plurality of signals, to identify anomalies (e.g., bugs) in the semiconductor design that cause the cascading failure propagation paths. Aligning of signals can be performed based on, for example, signal peak matching, signal energy matching,

More specifically, temporal correlation analysis can include, for example, a cross-correlation / measure of similarity of two series as a function of the displacement of one relative to the other (e.g., as determined by a sliding dot-product and/or sliding inner-product). The enhanced LLM 730 can be configured (e.g., trained, through pre-training and/or post-training) to transform data (e.g., text data, image data, tabular data, and/or etc.) to time series data (e.g., represented as a list, vector, and/or the like). The LLM 730 can be further configured to align and/or append signals from different sources (e.g., different design files, specifications, and/or etc.), such that a propagation path (e.g., an overarching signal) can be constructed over a plurality of levels and/or components of an integrated circuit (e.g., a simulated integrated circuit).

Some known LLMs are not configured to analyze time-series / temporal data (also referred to herein as sequentially arranged data points), such as signal data. The enhanced LLM 730 can be configured to analyze signal data (which can include, for example, terabytes of data) as a result of post-training. For example, instead of (or in addition to) being pre-trained, the enhanced LLM 730 can be post-trained using labeled waveform data. Once trained, the enhanced LLM 730 can identify relevant signals from millions of potential signals represented in the multimodal data 702. These signals can be associated with multiple levels of a semiconductor device. For example, a first level can include a subsystem level associated with a processor, memory, and/or etc., and a second level (e.g., above and/or more abstract than the first level) can include a chip level (e.g., a system-on-chip (SoC) level) associated with input / output (I/O), interconnects, and/or etc. A signal can span across these multiple levels, and the enhanced LLM 730 can be configured to consider a larger context to analyze the signal across the multiple levels. In some implementations, the enhanced LLM 730 can be configured to generate a depiction (e.g., a block diagram) to summarize the multiple levels of the semiconductor device.

In some embodiments, the enhanced LLM 730 can be configured to perform long-horizon tasks in conjunction with the tool integration component 740. For example, in some implementations, the semiconductor data generator can perform a search to select a tool(s) from a plurality of tools associated with the tool integration component 740 (e.g., the waveform analysis tools 742, the coverage analysis tools 744, and/or etc.). This selection can be based on which task (e.g., from a plurality of sequential tasks) is to be performed at a given stage of verification. The enhanced LLM 730 can then use the selected tool(s) to perform the task. By selecting a subset of tools, this search can be configured to reduce a search space associated with the plurality of tools, which can improve computational efficiency. For example, based on the selected subset of tools, a plurality of outputs (e.g., analysis results, anomaly detections, coverage results, and/or etc.) can be generated by those tools, and a verifier (e.g., an EDA tool) and/or an LLM-as-a-judge can assess the plurality of outputs to select an output(s) from the plurality of outputs. By reducing the search space, the plurality of outputs that is assessed can be reduced.

In some embodiments, the enhanced LLM 730 can be configured to facilitate self-correcting verification workflows. For example, the waveform agent 710 and/or the coverage agent 720 can execute in loops / iterations to perform iterative analysis (e.g., to iterate across multiple design levels, described above). As a result of these loops / iterations, the semiconductor analysis components 700 can generate the design files 756, which can include a modified design file that excludes an anomaly that was included in an initial design file. As a result, the semiconductor analysis components 700 can identify and mitigate the anomaly during design and/or verification and before proceeding to a silicon / manufacturing phase.

For example, in some implementations, the waveform agent 710 can be configured to perform static analysis on the multimodal data 702, which can include a specification(s) and/or design files, to generate a hypothesis. The waveform agent 710 can then perform dynamic verification to test that hypothesis, compiling and/or running code (e.g., RTL code and/or the like) and in response, analyzing log files to determine which aspects of the specification and/or design (as represented by the code) passed and/or which aspects failed. The waveform agent 710 can then perform waveform analysis to isolate / locate the anomaly within the code, such that the waveform agent 710 can further modify the specification(s) and/or design files.

In some embodiments, the coverage agent 720 can be configured to insert the anomaly into the multimodal data 702 to test a design's robustness / resiliency against the anomaly. The coverage agent 720 can place the anomaly to cover a gap identified by the coverage analysis tools 744, as indicated in the coverage reports 754. An anomaly can include, for example, undefined design and/or specification parameters, improperly defined design and/or specification parameters, a bit flip(s), and/or etc. In some implementations, the coverage agent 720 can be configured to implement an exploration space to generate synthetic anomaly data to identify design defects. In some implementations, the coverage agent 720 can be configured to generate a depiction / visualization (e.g., a scoreboard) of coverage status for functional groups, hardware groups, and/or etc.

FIG. 8 shows a flow diagram illustrating a method 800 for performing anomaly detection within identified signals, according to an embodiment. The method 800 can be implemented by a semiconductor data generator described herein (e.g., the semiconductor data generator 100 of FIG. 1). For example, the method 800 can be performed by a waveform agent that is functionally and/or structurally similar to the waveform agent 710 of FIG. 7. Portions of the method 800 can be implemented using a processor (e.g., the processor 220 of FIG. 2) of any suitable compute device (e.g., the compute device 201 of FIG. 2 and/or the compute devices 110 and/or 120 of FIG. 1).

The method 800 at 810 includes detecting a test failure. At 820, a waveform agent (e.g., similar to the waveform agent 710 of FIG. 10) is initialized, and at 830, context extraction is performed. This context extraction includes, at 832, parsing test case parameters, at 834, identifying relevant signals, and at 836, extracting waveform segments. The method 800 at 840 includes analyzing signal relationships. This analysis includes, at 842, cross-referencing of design information, at 844, analyzing temporal correlation, and at 846, integrating design context. At 850, the method 800 includes detecting an anomaly. More specifically, 850 includes, at 852, performing pattern recognition, at 854, a detecting constraint violation, and at 856, analyzing a behavioral anomaly. A root cause associated with the anomaly is analyzed at 860. More specifically, causal chain tracing is performed at 862, impact propagation is analyzed at 864, and a diagnosis is generated at 866. The method 800 at 870 includes generating a debug report, which can include a recommendation for addressing / mitigating the anomaly.

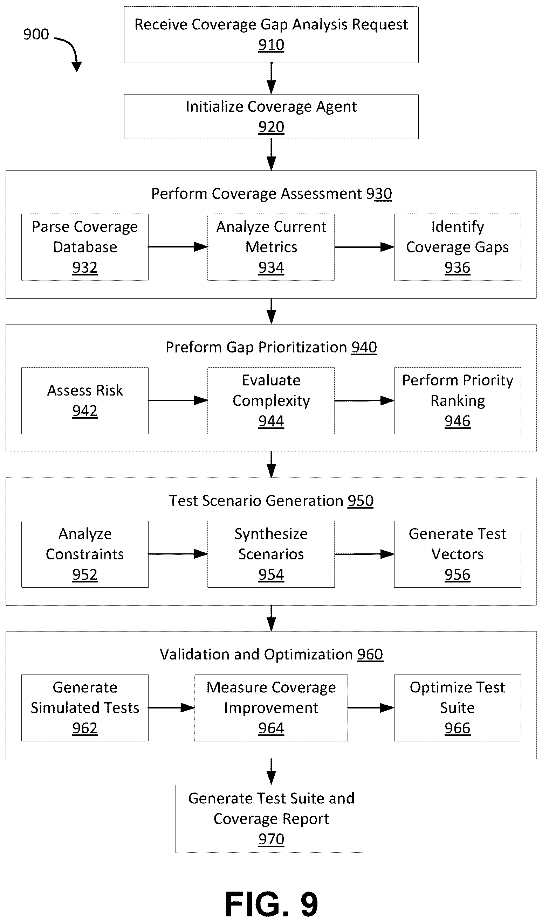

FIG. 9 shows a flow diagram illustrating a method 900 for assessing and promoting functional coverage as part of a validation process, according to an embodiment. The method 900 can be implemented by a semiconductor data generator described herein (e.g., the semiconductor data generator 100 of FIG. 1). For example, the method 900 can be performed by a waveform agent that is functionally and/or structurally similar to the coverage agent 720 of FIG. 7. Portions of the method 900 can be implemented using a processor (e.g., the processor 220 of FIG. 2) of any suitable compute device (e.g., the compute device 201 of FIG. 2 and/or the compute devices 110 and/or 120 of FIG. 1).

The method 900 at 910 includes receiving a coverage gap analysis request, and at 920, initializing a coverage agent (e.g., similar to the coverage agent 720 of FIG. 7). At 930, a coverage assessment is performed, which includes, at 932, parsing a coverage database, at 934, analyzing current (or contemporaneous) coverage metrics, and at 936, identifying coverage gaps. The method 900 at 940 includes assessing risk at 942, evaluating complexity at 944, and performing a priority ranging at 946. Test scenario generation is performed at 950, which includes constraint analysis at 952, scenario synthesis at 954, and test vector generation at 956. At 960, the method 900 includes validation and optimization. More specifically, simulated tests are generated at 962, coverage improvement is measured at 964, and a test suite is optimized at 966. The method 900 at 970 includes generating test suite report and/or a coverage report.

FIG. 10 shows a system block diagram of waveform analysis components 1000 included in a semiconductor data generator, according to an embodiment. The waveform analysis components 1000 can be included in a semiconductor data generator that is functionally and/or structurally similar to the semiconductor data generator 100 of FIG. 1. The waveform analysis components 1000 can be associated with a compute device (e.g., a compute device that is structurally and/or functionally similar to the compute device 201 of FIG. 2 and/or the compute devices 110 and/or 120 of FIG. 1). In some instances, for example, the waveform analysis components 1000 can be included in and/or associated with (1) the semiconductor development application 122 of FIG. 1 and/or (2) the semiconductor development application 212 of FIG. 2. In some instances, the waveform analysis components 1000 can include software stored in memory 210 and configured to execute via the processor 220 of FIG. 2. In some instances, for example, at least a portion of the waveform analysis components 1000 can be implemented in hardware (e.g., an ASIC).

The waveform analysis components 1000 include a waveform agent 1010, which can be functionally and/or structurally similar to the waveform agent 710 of FIG. 7. The waveform agent 1010 can include, implement, and/or be associated with a reasoning engine 1012, a knowledge base 1014, and a memory manager 1016. The waveform analysis components 1000 further include a tool integration component 1020, which can be functionally and/or structurally similar to the tool integration component 740 of FIG. 4. The tool integration component 1020 can include and/or have access to a plurality of tools, including a waveform parser 1022, a signal tracer 1024, a design analyzer 1026, a pattern matcher 1028, an anomaly detector 1030, and a report generator 1032.

As described herein, the waveform agent 1010 can perform a search (e.g., an exploration space search) to select an appropriate tool to complete, via the tool integration component 1020, a portion of a validation process. The search can be performed based on predefined knowledge represented in the knowledge base 1014. This predefined knowledge can include, for example, instructions to analyze a specification before a design file, such that tool selection is performed in that order. The memory manager 1016 can be configured to accumulate analysis data over multiple analysis iterations performed by the waveform agent 1010. For example, the waveform agent 1010 can analyze failure propagation paths by analyzing many files (e.g., thousands, tens of thousands, hundreds of thousands, etc.) to simulate integrated circuit cycles / dataflow across subcomponents / submodules of an integrated circuit. A bug in one subcomponent / submodule can trigger a chain reaction across multiple other subcomponents / submodules. The waveform agent 1010 can therefore trace the failure propagation path to the origin of the bug, using the memory manager 1016 to accumulate iterative analysis along the path. In some instances, the memory manager 1016 can be configured to prevent run-away execution of the iterative analysis (e.g., that results from an anomaly that causes the simulated integrated circuit dataflow to errantly and continuously loop).

As described herein, the waveform parser 1022 can be configured to detect and/or generate signal data that is represented in multimodal data (e.g., similar to the multimodal data 702 of FIG. 7). The signal tracer 1024 can trace each signal, and the design analyzer 1026 can establish a baseline interpretation of an intended design. The pattern matcher 1028 can compare this intended design to the traced signals, and the anomaly detector 1030 can detect an anomaly based on this comparison. The report generator 1032 can generate a report that indicates the anomaly type, consequences of the anomaly (e.g., performance consequences, requirements / specification deviation, and/or etc.), location of the anomaly (e.g., within a specification and/or design file), and/or a recommended action to resolve the anomaly.

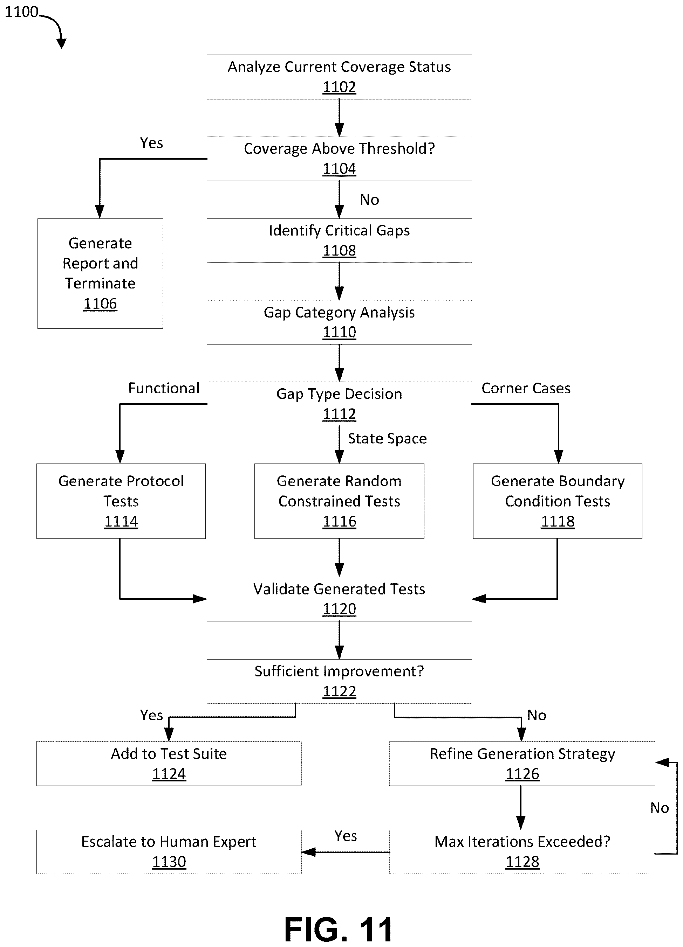

FIG. 11 shows a flow diagram illustrating a method 1100 for performing coverage analysis, according to an embodiment. The method 1100 can be implemented by a semiconductor data generator described herein (e.g., the semiconductor data generator 100 of FIG. 1). For example, the method 1100 can be performed by a waveform agent that is functionally and/or structurally similar to the coverage agent 720 of FIG. 7. Portions of the method 1100 can be implemented using a processor (e.g., the processor 220 of FIG. 2) of any suitable compute device (e.g., the compute device 201 of FIG. 2 and/or the compute devices 110 and/or 120 of FIG. 1).

The method 1100 at 1102 includes analyzing current coverage status for a validation process. At 1104, a predefined coverage threshold is compared with the current coverage status, and if coverage (e.g., functional coverage for validation of an integrated circuit and/or the like) is above the threshold, a report is generated at 1106, and the method 1100 terminates. Alternatively, if the coverage is below the threshold, critical gaps are identified at 1108, and these gaps are categorized at 1110. Gap categories can include, for example, functional gaps, state space gaps, and/or corner case gaps, and each gap category type can influence a decision at 1112. For example, protocol tests can be generated at 1114 for functional gaps, random constrained tests can be generated at 1116 for state space gaps, and boundary condition tests can be generated at 1118 for corner case gaps. At least some of the foregoing tests can be validated at 1120, and sufficient improvement to the coverage status is assessed at 1122. If coverage status is sufficiently improved, at least some of the foregoing tests generated at 1114, 1116, and/or 1118 are added to a test suite at 1124. Otherwise, at least of the foregoing generated tests are refined / modified at 1126 until either coverage improves or a maximum number of iterations is reached or exceeded (assessed at 1128), which can result in escalation to a human expert at 1130.

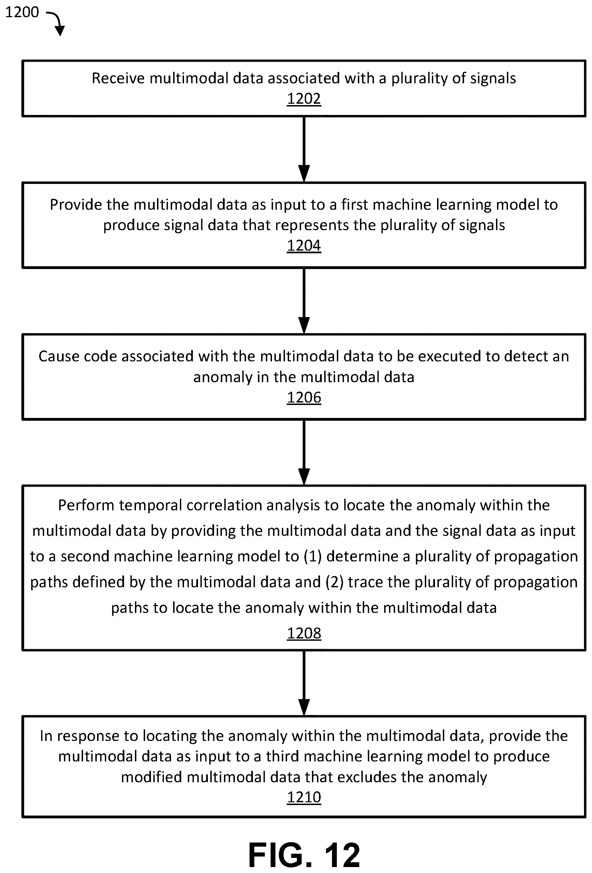

FIG. 12 shows a flow diagram illustrating a method 1200 for producing modified multimodal data that excludes an anomaly, according to an embodiment. The method 1200 can be implemented by a semiconductor data generator described herein (e.g., the semiconductor data generator 100 of FIG. 1). Portions of the method 1200 can be implemented using a processor (e.g., the processor 220 of FIG. 2) of any suitable compute device (e.g., the compute device 201 of FIG. 2 and/or the compute devices 110 and/or 120 of FIG. 1).

The method 1200 at 1202 includes receiving multimodal data associated with a plurality of signals. The multimodal data is provided as input to a first machine learning model at 1204 to produce signal data that represents the plurality of signals, and code associated with the multimodal data is executed at 1206 to detect an anomaly in the multimodal data. The method 1200 at 1208 includes performing temporal correlation analysis to locate the anomaly within the multimodal data by providing the multimodal data and the signal data as input to a second machine learning model. As a result, a plurality of propagation paths defined by the multimodal data is determined, and the plurality of propagation paths is traced to locate the anomaly within the multimodal data. In response to locating the anomaly within the multimodal data, at 1210, the method 1200 includes providing the multimodal data as input to a third machine learning model to produce modified multimodal data that excludes the anomaly.

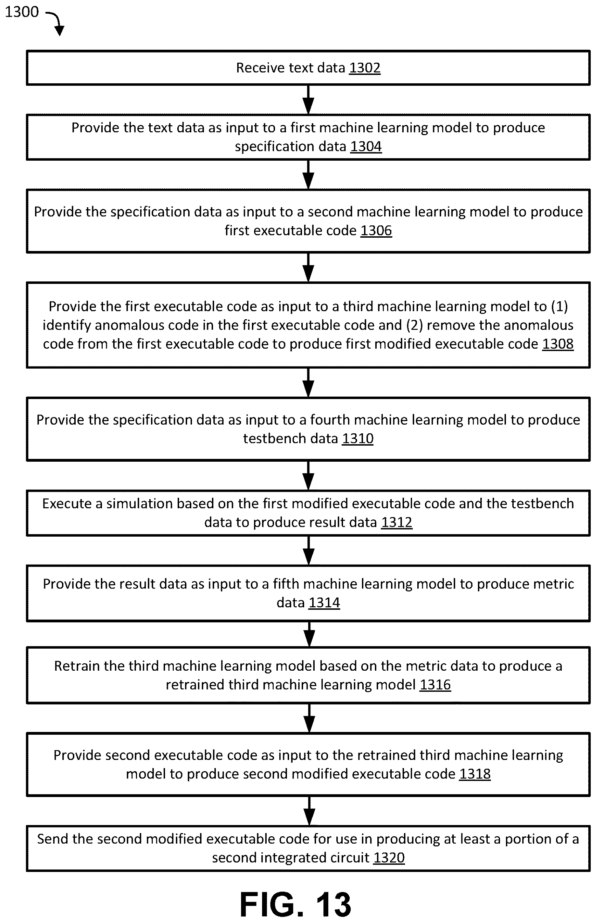

FIG. 13 shows a flow diagram illustrating a method 1300 for producing data to facilitate semiconductor design, development, and/or verification, according to an embodiment. The method 1300 can be implemented by a semiconductor data generator described herein (e.g., the semiconductor data generator 100 of FIG. 1). Portions of the method 1300 can be implemented using a processor (e.g., the processor 220 of FIG. 2) of any suitable compute device (e.g., the compute device 201 of FIG. 2 and/or the compute devices 110 and/or 120 of FIG. 1).

The method 1300 at 1302 includes receiving text data that specifies a design parameter for a first integrated circuit. At 1304, the text data is provided as input to a first machine learning model to produce specification data having a predefined format. The specification data is provided as input to a second machine learning model at 1306 to produce first executable code that represents the specification data. The method 1300 at 1308 includes providing the first executable code as input to a third machine learning model to (1) identify / locate anomalous code in the first executable code and (2) remove the anomalous code from first executable code to produce first modified executable code. The specification data is provided as input to a fourth machine learning model at 1310 to produce testbench data, and a simulation is executed at 1312 based on the first modified executable code and the testbench data to produce result data. At 1314, the method 1300 includes providing the result data as input to a fifth machine learning model to produce metric data. The third machine learning model is retrained at 1316 based on the metric data to produce a retrained third machine learning model, and second executable code is provided as input to the retrained third machine learning model at 1318 to produce second modified executable code, the second executable code being different than the first executable code. At least a portion of a second integrated circuit is produced (e.g., designed, displayed and/or fabricated) at 1320 based on the second modified executable code.

The second integrated circuit can be produced in an automated manner and/or based on one or more control signals generated after the second modified executable code (e.g., second design code) has been produced (e.g., in response thereto, or as a consequence thereof). For example, the second integrated circuit can be produced in a manner that is similar to a first integrated circuit produced based on the first modified executable code. Unlike the first integrated circuit, however, the second integrated circuit can be produced following automatic modification of the second executable code (e.g., without user approval). This automatic modification can be facilitated by the retraining (e.g., iterative improvement) of the third machine learning model (e.g., an LLM included in (or accessed by) a modifier), which can be performed in relation to the first integrated circuit and can obviate involvement of a user-in-the-loop.

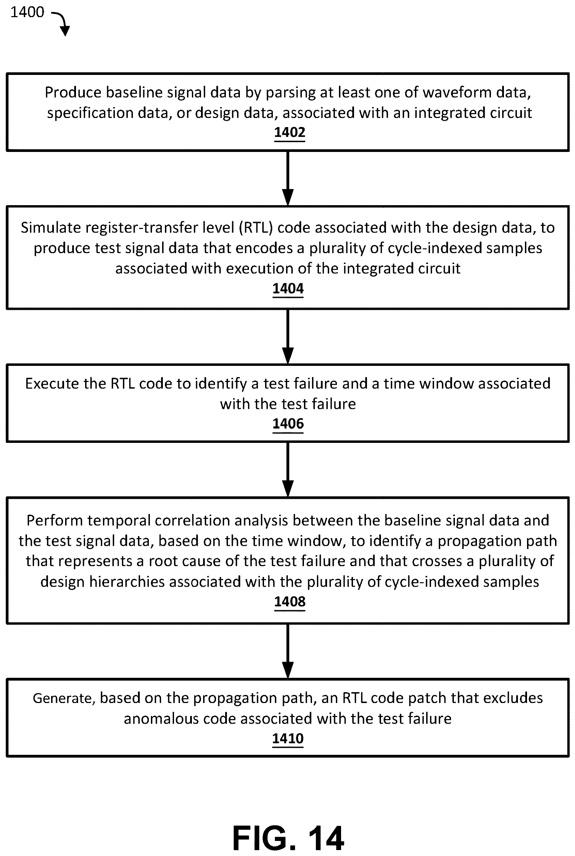

FIG. 14 shows a flow diagram illustrating a method 1400 for generating a register-transfer level (RTL) code patch, according to an embodiment. The method 1400 can be implemented by a semiconductor data generator described herein (e.g., the semiconductor data generator 100 of FIG. 1). Portions of the method 1400 can be implemented using a processor (e.g., the processor 220 of FIG. 2) of any suitable compute device (e.g., the compute device 201 of FIG. 2 and/or the compute devices 110 and/or 120 of FIG. 1).

The method 1400 at 1402 includes producing baseline signal data, via a processor, by parsing at least one of waveform data, specification data, or design data, associated with an integrated circuit. The method 1400 also includes, at 1404, simulating, via the processor, register-transfer level (RTL) code associated with the design data, to produce test signal data that encodes a plurality of cycle-indexed samples associated with execution of the integrated circuit. At 1406, the method 1400 includes executing, via the processor, the RTL code to identify a test failure and a time window associated with the test failure. The method 1400 further includes, 1408, performing, via the processor, temporal correlation analysis between the baseline signal data and the test signal data, based on the time window, to identify a propagation path that represents a root cause of the test failure and that crosses a plurality of design hierarchies associated with the plurality of cycle-indexed samples. Based on the propagation path, an RTL code patch that excludes anomalous code associated with the test failure is generated at 1410, via the processor.

According to an embodiment, a system for automating semiconductor design and verification can include a natural language processing (NLP) module (e.g., component) configured to interpret natural language inputs and generate detailed design specifications. The system can further include a code generation module configured to produce executable code from design specifications and text instructions. The system can further include a test plan and testbench generation module configured to develop test plans, testbenches, SystemVerilog assertions, and UVM test codes based on the design specifications. A compilation and simulation component included in the system can be configured to compile the testbenches and execute simulations (e.g., of dataflow within an integrated circuit under development) to verify the designs. The system can further include an LLM-based verification module configured to analyze simulation results, generate verification reports, and provide insights for optimization.

In some implementations, the NLP module can use large language models to transform natural language conversations into structured design specifications. In some implementations, the code generation module can ensure the generated code adheres to the design specifications and is compliant with industry standards. In some implementations, the test plan and testbench generation module can automatically develop comprehensive test plans and testbenches, including SystemVerilog assertions and UVM test codes. In some implementations, the compilation and simulation module can iteratively compile the generated testbenches and runs simulations to test the design's performance. In some implementations, the system can further include an optimizer (also referred to herein as an optimizer agent(s) and/or a OpAgents module) that can iteratively optimize the design and testbenches based on verification reports that assess coverage, timing, power consumption, and area.

In some implementations, the OpAgents module can use large language models to analyze verification reports and make informed adjustments to the design and verification process. In some implementations, the OpAgents module can continuously refine the design specifications and testbenches through iterative cycles to improve overall performance metrics. In some implementations, the system can further include a modifier (also referred to herein as a debug agent(s) and/or a DebugAgents module) configured to automatically detect bugs (e.g., software bugs) in the design code and testbenches and provide suggestions for fixes. In some implementations, the DebugAgents module can present suggested fixes to a user for approval before automatically updating the design code and testbenches. In some implementations, the DebugAgents module can iteratively improve its bug detection and resolution capabilities by learning from each debugging cycle. In some implementations, the LLM-based verification module can generate detailed reports that highlight discrepancies in the design and provide recommendations for optimization.

According to an embodiment, a method for automating semiconductor design and verification can include receiving natural language input to generate design specifications and generating code based on the design specifications. The method can further include developing test plans and testbenches, including SystemVerilog assertions and UVM test codes. The testbenches can be compiled and simulated to verify the design, and the design and testbenches can be iteratively optimized based on verification reports through the use of artificial intelligence (AI) agents (also referred to herein as autonomous agents).

In some implementations, the method can further include automatically detecting and resolving bugs in the design code and testbenches and generating suggestions for user approval before implementation. In some implementations, the optimization process can include analyzing coverage, timing, power consumption, and area metrics to enhance design performance.

According to an embodiment, a computer-implemented method for autonomous hardware design debugging includes an agentic AI system that analyzes simulation waveforms, automatically identifies failure modes, traces root causes through signal relationships, and generates diagnostic reports without human intervention. This method can be implemented by an autonomous waveform debugging system.

According to an embodiment, a system (e.g., an intelligent coverage gap analysis system) for automated functional coverage optimization includes an AI agent that analyzes coverage databases, prioritizes gaps based on risk assessment, generates targeted test scenarios, and validates coverage improvements through iterative simulation.

According to an embodiment, a method for multi-modal design analysis integration includes combining waveform analysis with design database information, wherein an AI system cross-references signal behavior with design intent, hierarchy information, and constraint specifications to provide comprehensive failure diagnosis.

According to an embodiment, an AI system implements a self-correcting verification agent that generates verification hypotheses, validates analysis through tool feedback, and iteratively refines debugging and/or coverage strategies based on results verification.

According to an embodiment, a method includes scalable signal context extraction by intelligently selecting relevant signal subsets from large waveform databases based on failure symptoms and design hierarchy analysis.

According to an embodiment, a system implements a temporal correlation analysis engine configured to analyze time-based signal relationships to identify failure propagation paths and causal chains in hardware designs.

According to an embodiment, a method to implement an adaptive test generation strategy by dynamically generating test scenarios based on coverage gap characteristics, design constraints, and historical analysis results.

According to an embodiment, a system performs risk-weighted coverage prioritization by prioritizing coverage gaps based on design criticality, complexity metrics, and verification risk assessment.

Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using Python, Java, JavaScript, C++, and/or other programming languages and development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features can not necessarily be limited to a particular order of execution, but rather, any number of threads, processes, services, servers, and/or the like that can execute serially, asynchronously, concurrently, in parallel, simultaneously, synchronously, and/or the like in a manner consistent with the disclosure. As such, some of these features can be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

Some embodiments described herein relate to a computer storage product with a non-transitory computer-readable medium (also can be referred to as a non-transitory processor-readable medium and/or a machine-readable medium) having instructions or computer code thereon for performing various computer-implemented operations. The computer-readable medium (or processor-readable medium, machine-readable medium, etc.) is non-transitory in the sense that it does not include transitory propagating signals per se (e.g., a propagating electromagnetic wave carrying information on a transmission medium such as space or a cable). The media and computer code (also can be referred to as code) can be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules can include, for example, a processor, a field programmable gate array (FPGA), and/or an application specific integrated circuit (ASIC). Software modules (executed on hardware) can include instructions stored in a memory that is operably coupled to a processor and can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

## Claims

1. A non-transitory, processor-readable medium storing instructions that, when executed by a processor, cause the processor to:
receive multimodal data associated with a plurality of signals;
provide the multimodal data as input to a first machine learning model to produce signal data that represents the plurality of signals;
cause code associated with the multimodal data to be executed to detect an anomaly in the multimodal data;
perform temporal correlation analysis to locate the anomaly within the multimodal data by providing the multimodal data and the signal data as input to a second machine learning model to:
determine a plurality of propagation paths defined by the multimodal data, and
trace the plurality of propagation paths to locate the anomaly within the multimodal data; and
in response to locating the anomaly within the multimodal data, provide the multimodal data as input to a third machine learning model to produce modified multimodal data that excludes the anomaly.

2. The non-transitory, processor-readable medium of claim 1, wherein:
the first machine learning model includes a first large language model (LLM) that implements a first autonomous agent;
the second machine learning model includes a second LLM that implements a second autonomous agent; and
the third machine learning model includes a third LLM that implements a third autonomous agent.

3. The non-transitory, processor-readable medium of claim 1 or 2, wherein at least one of:
the signal data encodes a plurality of sequentially arranged data points, and the second machine learning model includes a large language model (LLM) that is post-trained to analyze the plurality of sequentially arranged data points;
the multimodal data includes at least one of register transfer level (RTL) data, universal verification methodology (UVM) testbench data, test plan data, timing diagram data, block diagram data, text data, table data, schematic data, or waveform data, that represents the plurality of signals using a plurality of signal encoding schemes; or
the code includes register transfer level (RTL) code that encodes dataflow associated with the plurality of signals.

4. The non-transitory, processor-readable medium of any preceding claim, wherein:
the plurality of signals represents a plurality of execution cycles (1) performed by an integrated circuit and (2) that is specified by the multimodal data,
the temporal correlation analysis being performed across the plurality of execution cycles.

5. The non-transitory, processor-readable medium of any preceding claim, wherein the multimodal data is first multimodal data, the non-transitory, processor-readable medium further storing instructions to cause the processor to:
provide second multimodal data that is equivalent to the modified multimodal data as input to a fourth machine learning model to add the anomaly to the second multimodal data based on a coverage metric, to produce the first multimodal data.

6. The non-transitory, processor-readable medium of any preceding claim, further storing instructions to cause the processor to at least one of:
provide the modified multimodal data as input to a fourth machine learning model to generate schematic data, and render the schematic data to cause display of a diagram that represents the multimodal data;
provide the modified multimodal data as input to a fourth machine learning model to generate schematic data, and render the schematic data to cause display of a diagram that represents the multimodal data, the diagram including at least one of a block diagram or a circuit diagram, that represents an integrated circuit associated with the multimodal data; or
cause at least a portion of an integrated circuit to be produced based on the modified multimodal data.

7. The non-transitory, processor-readable medium of any preceding claim, wherein:
the instructions to cause the processor to receive the multimodal data include instructions to cause the processor to receive the multimodal data from a plurality of files that specifies a design for an integrated circuit.

8. The non-transitory, processor-readable medium of any preceding claim, wherein:
the plurality of signals is associated with:
a system-on-chip (SoC) level that is associated with an integrated circuit and that represents an interconnect of the integrated circuit, and
a subsystem level that is associated with the integrated circuit and that represents at least one of a processor of the integrated circuit or a memory of the integrated circuit; and
the instructions to cause the processor to produce the signal data include instructions to cause the processor to produce the signal data by simulating, based on the multimodal data, dataflow within the integrated circuit.

9. A non-transitory, processor-readable medium storing instructions that, when executed by a processor, cause the processor to:
receive text data that specifies a design parameter for a first integrated circuit;
provide the text data as input to a first machine learning model to produce specification data having a predefined format;
provide the specification data as input to a second machine learning model to produce first executable code that represents the specification data;
provide the first executable code as input to a third machine learning model to (1) identify anomalous code in the first executable code and (2) remove the anomalous code from the first executable code to produce first modified executable code;
provide the specification data as input to a fourth machine learning model to produce testbench data;
execute a simulation based on the first modified executable code and the testbench data to produce result data;
provide the result data as input to a fifth machine learning model to produce metric data;
retrain the third machine learning model based on the metric data to produce a retrained third machine learning model;
provide second executable code as input to the retrained third machine learning model to produce second modified executable code, the second executable code being different than the first executable code; and
send the second modified executable code for use in producing at least a portion of a second integrated circuit.

10. The non-transitory, processor-readable medium of claim 9, wherein at least one of:
the first machine learning model includes a first large language model (LLM) that implements a first autonomous agent, the second machine learning model includes a second LLM that implements a second autonomous agent, the third machine learning model includes a third LLM that implements a third autonomous agent, the fourth machine learning model includes a fourth LLM that implements a fourth autonomous agent, and the fifth machine learning model includes a fifth LLM that implements a fifth autonomous agent;
the first executable code includes first register transfer level (RTL) code;
the second executable code includes second RTL code different from the first RTL code;
the metric data indicates at least one of a coverage, a timing, a power consumption, or an area, associated with the first integrated circuit; or
the testbench data defines a validation test of the specification data, the simulation being configured to implement the validation test to produce the result data.

11. The non-transitory, processor-readable medium of claim 9 or 10, wherein at least one of:
the text data is first text data, the non-transitory, processor-readable medium further storing instructions to cause the processor to provide second text data as input to a sixth machine learning model to add a representation of the anomalous code to the second text data based on a coverage metric, to produce the first text data; or
the instructions to cause the processor to identify the anomalous code in the first executable code include instructions to cause the processor to perform temporal correlation analysis of the first executable code to identify the anomalous code.

12. A method, comprising:
producing baseline signal data, via a processor, by parsing at least one of waveform data, specification data, or design data, associated with an integrated circuit;
simulating, via the processor, register-transfer level (RTL) code associated with the design data, to produce test signal data that encodes a plurality of cycle-indexed samples associated with execution of the integrated circuit;
executing, via the processor, the RTL code to identify a test failure and a time window associated with the test failure;
performing, via the processor, temporal correlation analysis between the baseline signal data and the test signal data, based on the time window, to identify a propagation path that represents a root cause of the test failure and that crosses a plurality of design hierarchies associated with the plurality of cycle-indexed samples; and
generating, via the processor and based on the propagation path, an RTL code patch that excludes anomalous code associated with the test failure.

13. The method of claim 12, further comprising:
transforming, via the processor, natural language design text associated with the design data to the specification data having a predefined schema;
generating, via the processor and based on the specification data, the RTL code and testbench code;
compiling and simulating, via the processor, the RTL code and testbench code to generate a coverage metric value; and
iteratively editing and simulating, via the processor, at least one of the RTL code or the testbench code, based on the coverage metric value being below a predefined coverage threshold.

14. The method of claim 12 or 13, wherein the performing the temporal correlation analysis includes at least one of:
computing a sliding dot-product between the baseline signal data and the test signal data;
performing signal peak matching to align the baseline signal data and the test signal data; or
performing signal energy matching to align the baseline signal data and the test signal data.

15. The method of any of claims 12-14, wherein at least one of the baseline signal data or the test signal data includes a representation of a plurality of dependencies associated with (1) the at least one of the waveform data, the specification data, or the design data and (2) the plurality of design hierarchies.
